# FASCICULE DE BREVET EUROPEEN

(11) **EP 1 745 603 B1**
(45) Date de publication et mention de la délivrance du brevet: **21.05.2008**
(21) Numéro de dépôt: 04742451.0
(22) Date de dépôt: 07.04.2004
(51) Int. Cl.: H04L 12/56

(54) **PROCEDE ET DISPOSITIF D'EMISSION DE PAQUETS DE DONNEES**
VERFAHREN UND EINRICHTUNG ZUM SENDEN VON DATENPAKETEN
METHOD AND DEVICE FOR TRANSMITTING DATA PACKETS

(43) Date de publication de la demande: 24.01.2007
(73) Titulaire: France Telecom S.A., 75015 Paris (FR)
(72) Inventeur: PENHOAT, Joël, 22300 Lannion (FR); CHANTEAU, Gilles, 98717 Punaauia Tahiti Polynesie Francaise (FR)
(74) Mandataire: Desormiere, Pierre-Louis
(86) Numéro de dépôt international: PCT/FR2004/000862
(87) Numéro de publication internationale: WO 2005/109782

(56) Documents cités:
- JUN KE ET AL: "Towards a rate-based TCP protocol for the Web" MODELING, ANALYSIS AND SIMULATION OF COMPUTER AND TELECOMMUNICATION SYSTEMS, 2000. PROCEEDINGS. 8TH INTERNATIONAL SYMPOSIUM ON SAN FRANCISCO, CA, USA 29 AUG.-1 SEPT. 2000, LOS ALAMITOS, CA, USA,IEEE COMPUT. SOC, US, 29 août 2000 (2000-08-29), pages 36-45, XP010515397 ISBN: 0-7695-0728-X
- PADMANABHAN ET AL.: "TCP FAST START: A TECHNIQUE FOR SPEEDING UP WEB TRANSFERS"[Online] novembre 1998 (1998-11), pages 1-6, XP001203668 SYDNEY, AUSTRALIA Extrait de l'Internet: URL:http://citeseer.ist.psu.edu/cache/pape rs/cs/9210/http:zSzzSzwww.cs.columbia.eduz Sz~hgszSzInternetTCzSzGlobalInternet98zSzP adm9811_TCP.pdf/padmanabhan98tcp.pdf> [extrait le 2004-11-09]
- AGGARWAL A ET AL: "Understanding the performance of TCP pacing" 26 mars 2000 (2000-03-26), INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, PAGE(S) 1157-1165 , XP010376051 ISBN: 0-7803-5880-5 page 1157, colonne de gauche - page 1160, colonne de gauche

## Description

L'invention concerne un procédé et un dispositif d'émission de paquets de données d'un émetteur à destination d'un récepteur par une connexion établie dans un réseau de télécommunication pour des liaisons à long délai aller-retour lors du démarrage du transfert.

Le mode de transmission de données par paquets est utilisé par exemple dans le protocole de transmission TCP (Protocole de Contrôle de Transmission).

On peut citer comme exemples de transmission par paquets les liaisons satellite avec retour terrestre, les liaisons sur les réseaux de téléphone mobile tels que GPRS (Service Général de Radiocommunications en mode paquet ou, en anglais, "General Paquet Radio Service") ou UMTS (Système universel de télécommunication avec les mobiles ou, en anglais, "Universal Mobile Telecommunication System").

Les protocoles effectuant le contrôle de débit d'émission en mode paquet se basent sur une technique d'acquittement asynchrone et de fenêtres glissantes d'émission.

La fenêtre d'émission est définie par la quantité de données des paquets qui ont été émis et pour lesquels aucun acquittement correspondant à ces paquets n'a encore été reçu du récepteur.

Les acquittements envoyés par le récepteur permettent de faire avancer la fenêtre, mais aussi d'augmenter ou de diminuer sa taille suivant les acquittements. La valeur de l'unité de transfert maximum MTU (en anglais « Maximum Transfer Unit »), qui fixe la taille maximum des paquets sur le réseau prend en général une valeur voisine de 1500 octets. C'est cette valeur qui sera utilisée pour les exemples par la suite.

Dans le protocole TCP, l'émetteur initialise la fenêtre d'émission à un paquet, voire à quelques paquets (généralement quatre au plus). Puis, pendant une première phase transitoire, dite de départ lent (en anglais : "Slow Start"), la fenêtre d'émission est augmentée, exponentiellement, d'un paquet pour chaque acquittement reçu du récepteur, jusqu'à ce que la fenêtre atteigne un seuil désigné par "ssthresh". Ensuite, la fenêtre entre dans une phase linéaire, dite d'évitement de congestion ("Congestion Avoidance" en anglais) où elle augmente d'un paquet chaque fois qu'un acquittement a été reçu pour la fenêtre entière.

Il s'ensuit que la durée d'augmentation de la fenêtre d'émission est longue en pratique avant d'atteindre une taille permettant un débit optimal. En effet, le rythme auquel la fenêtre d'émission peut être augmenté dépend directement du temps de trajet aller-retour entre l'émetteur et le récepteur.

Ainsi, dans le cas d'une liaison satellite à 650 millisecondes de délai aller-retour, ayant une bande passante de 2 Mégabits par seconde, la taille de la fenêtre d'émission permettant de remplir cette bande passante est de plus de cent paquets IP de 1 500 octets. Il faudrait donc théoriquement sept allers-retours pour atteindre cette taille, soit plus de 4,5 secondes, mais en réalité beaucoup plus car les récepteurs TCP envoient un acquittement tous les deux paquets reçus, lorsque le transfert entre en régime permanent.

Ainsi, le débit moyen durant la phase de départ est relativement faible, ce qui est particulièrement pénalisant pour le téléchargement de pages Internet, qui utilisent plusieurs connexions TCP pour transférer les objets d'une page, qui sont souvent de petite taille.

Sur les liaisons à long délai et à bande passante étroite, comme sur les réseaux mobiles GPRS, la bande passante maximale est d'une quarantaine de kilobits par seconde pour un délai aller-retour d'un minimum de 2 secondes et des paquets IP de 1 500 octets. Il s'ensuit que les ressources GPRS risquent d'être relâchées et réallouées plusieurs fois avant d'atteindre le régime permanent de transfert.

Le document JUN KE ET AL : « Towards a rate-based TCP protocol for the Web » MODELING, ANALYSIS AND SIMULATION OF COMPUTER AND TELECOMMUNICATION SYSTEMS, 2000. PROCEEDINGS. 8TH INTERNATIONAL SYMPOSIUM ON SANS FRANCISCO, CA, USA 29 AUG.-1 SEPT. 2000, LOS ALAMITOS, CA, USA, IEEE COMPUT. SOC, US, 29 août 2000 (200-08-29), pages 36-45, XPO10515397 ISBN: 0-7695-0728-X décrit une méthode base sur un mécanisme RBP (Rate-Based Pacing) pour réduire la sporadicité (burstness) dans les transferts TCP.

Le document PADMANABHAN ET AL. : « TCP FAST START : A TECHNIQUE FOR SPEEDING UP WEB TRANSFERS »[Online] novembre 1998 (1998-11), pages 1-6, XP001203668 SYDNEY, AUSTRALIA. Extrait de l'Internet :URL : http://citeseer.ist.psu.edu/cache/papers/cs/9210/http:zSzzSzwww.cs.columbia.eduzSz ~hgszSzInternetTCzSzGlobalInternet98zSzPadm98 11_ TCP.pdf/padmanabhan98tcp. pdf>; [extrait le 2004-11-09] divulgue une méthode pour accélérer les transferts courts de données tels que les téléchargements de pages Web.

L'invention vise à obtenir un procédé et un dispositif d'émission de paquets de données palliant les inconvénients de l'état de technique et permettant d'augmenter le débit d'émission de paquets lors de la première phase transitoire.

A cet effet, un premier objet de l'invention est un procédé d'émission de paquets de données d'un émetteur à destination d'un récepteur par une connexion établie dans un réseau de télécommunication,
l'émetteur comportant une fenêtre d'émission de paquets de données, définie par la quantité de données des paquets qui ont été émis et pour lesquels aucun acquittement correspondant au premier paquet dans l'ordre chronologique d'émission n'a encore été reçu du récepteur,
caractérisé en ce que pendant une phase de départ survenant avant que l'émetteur ne reçoive du récepteur le premier acquittement dans l'ordre chronologique, l'émetteur émet à destination du récepteur par la connexion établie dans le réseau de télécommunication, à plusieurs intervalles de temps successifs prescrits pendant la phase de départ, des salves de nombres prescrits d'au moins un paquet, pour incrémenter successivement la fenêtre d'émission de ces nombres prescrits de paquets.

Ainsi, grâce à l'invention, l'émetteur émet un grand nombre de paquets en plusieurs fois avant de recevoir le premier acquittement. Cette émission en plusieurs fois permet de lisser l'émission des paquets de la première fenêtre pour éviter des débits crêtes trop grands, qui aboutiraient à des pertes de paquets. En outre, il est ainsi évité de devoir attendre le premier acquittement pour augmenter la taille de la fenêtre d'émission. On profite justement de ce temps d'attente, pouvant être long, pour émettre successivement des salves de paquets pendant celui-ci. Il s'ensuit que le régime permanent peut être atteint plus rapidement et peut commencer dès la réception du premier acquittement. L'invention est ainsi appropriée aux connexions par un réseau de télécommunication ayant un temps d'aller - retour long entre l'émetteur et le récepteur lors du démarrage du transfert.

Suivant d'autres caractéristiques non limitatives de l'invention :
- les salves de paquets émises pendant la phase de départ sont telles que la quantité de données de chaque salve divisée par l'intervalle de temps par rapport à la salve précédente est inférieure à la bande passante BP de la connexion pour chaque récepteur ;
- les intervalles de temps sont une même période T prédéterminée et chaque salve est constituée d'un même nombre prédéfini N de paquets à émettre ;
- les paquets des salves émises pendant la phase de départ possèdent la même quantité MTU de données et vérifient l'équation pour chaque récepteur : N.MTU/T ≤ BP ;
- l'émetteur comporte un temporisateur d'émission réglé sur la période prédéterminée pour effectuer ladite surveillance de l'arrivée de chaque période ;
- l'émetteur surveille pendant la phase de départ à chaque intervalle de temps prescrit, dans une première étape de contrôle, si le premier acquittement a été reçu, pour permettre l'émission desdites salves et l'incrémentation de la fenêtre d'émission desdits nombres prescrits de paquets pendant la phase de départ dans le cas où au moins le premier contrôle est négatif, et,
dans le cas où le premier contrôle est positif, l'émetteur met fin à la phase de départ, émet au cours d'une deuxième phase postérieure à la phase de départ une seule autre salve d'au moins un paquet à émettre et attend, avant d'émettre une nouvelle salve d'au moins un paquet à émettre et chaque salve suivante, d'avoir reçu au moins un acquittement du récepteur pour la salve précédente ;
- l'émetteur surveille pendant la phase de départ à chaque intervalle de temps prescrit, dans une deuxième étape de contrôle, si un temps prescrit depuis un instant initial est écoulé, pour permettre l'émission desdites salves et l'incrémentation de la fenêtre d'émission desdits nombres prescrits de paquets pendant la phase de départ dans le cas où au moins le deuxième contrôle est négatif, et,
dans le cas où le deuxième contrôle est positif, l'émetteur met fin à la phase de départ, émet au cours d'une deuxième phase postérieure à la phase de départ une seule autre salve d'au moins un paquet à émettre et attend, avant d'émettre une nouvelle salve d'au moins un paquet à émettre et chaque salve suivante, d'avoir reçu au moins un acquittement du récepteur pour la salve précédente ;
- la deuxième phase postérieure à la phase se déroule selon le protocole TCP et le mécanisme de départ lent, dans lequel la fenêtre d'émission est augmentée d'un paquet à chaque acquittement reçu, et/ou selon le mécanisme d'évitement de congestion, dans lequel la fenêtre d'émission est augmentée d'un paquet à chaque acquittement reçu pour la fenêtre entière d'émission, le mécanisme de départ lent ayant lieu lorsque la fenêtre d'émission a une taille inférieure ou égale à un deuxième seuil prescrit ssthresh de valeur finie, et le mécanisme d'évitement de congestion ayant lieu lorsque la fenêtre d'émission a une taille supérieure à ce deuxième seuil prescrit ssthresh ;
- lors du passage de l'émetteur de la phase de départ à la deuxième phase, la fenêtre d'émission de celui-ci reste à la valeur atteinte précédemment lors de la phase de départ ;
- la quantité de données des salves émises par l'émetteur pendant la phase de départ est limitée à un premier seuil Wmax de valeur finie ;
- le deuxième seuil prescrit ssthresh est inférieur au premier seuil Wmax. ;
- le deuxième seuil prescrit ssthresh est prescrit à une valeur finie, égale à environ trois quarts du premier seuil Wmax ;
- le premier seuil est prescrit en fonction des intervalles de temps et de la bande passante de la connexion pour chaque récepteur ;
- l'émetteur contrôle pendant la phase de départ à chaque intervalle de temps prescrit, dans une troisième étape de contrôle, si une valeur prévue de la fenêtre d'émission, qui est égale à la valeur de la fenêtre d'émission, augmentée de l'incrément prescrit de paquets, est inférieure au premier seuil prédéterminé, pour que ladite émission de la salve correspondant à l'intervalle de temps soit de cet incrément de paquets dans le cas où le troisième contrôle est positif, et pour que ladite émission de la salve correspondant à l'intervalle de temps soit de la différence entre le premier seuil et la valeur de la fenêtre d'émission dans le cas où le troisième contrôle est négatif, la valeur de la fenêtre d'émission étant incrémentée du nombre de paquets de la salve émise ;
- la connexion établie dans le réseau de télécommunication possède un temps de trajet aller-retour entre l'émetteur et le récepteur d'au moins 200 millisecondes.

Un deuxième objet de l'invention est un dispositif d'émission de paquets de données d'un émetteur, pour la mise en oeuvre du procédé d'émission de paquets suivant l'une quelconque des revendications précédentes, l'émetteur comportant une fenêtre d'émission de paquets de données, définie par la quantité de données des paquets qui ont été émis et pour lesquels aucun acquittement correspondant au premier paquet dans l'ordre chronologique d'émission n'a encore été reçu du récepteur,
caractérisé en ce que le dispositif comporte :
- un moyen pour surveiller la réception par l'émetteur du premier acquittement du récepteur dans l'ordre chronologique,
- un moyen de déclenchement d'émissions successives pour déclencher l'émission par l'émetteur, à plusieurs intervalles de temps prescrits successifs pendant la phase de départ, de salves de nombres prescrits d'au moins un paquet, pour incrémenter à chaque intervalle de temps prescrit la fenêtre d'émission de l'émetteur du nombre prescrit de paquets de la salve correspondante,
- un moyen pour désactiver ledit moyen de déclenchement d'émissions successives, lorsque le moyen de surveillance de réception indique que le premier acquittement du récepteur a été reçu par l'émetteur.

L'invention sera mieux comprise à la lecture de la description qui va suivre, donnée uniquement à titre d'exemple non limitatif en référence aux dessins annexés, sur lesquels :
- la figure 1 représente schématiquement un réseau d'ordinateurs dans lequel est mis en oeuvre le procédé et le dispositif suivant l'invention ;
- la figure 2 représente un organigramme du procédé d'émission suivant l'invention;
- la figure 3 représente la trace des paquets émis et acquittements reçus par un émetteur TCP mettant en oeuvre le procédé d'émission suivant l'invention, et ce durant les deux premiers délais d'aller-retour de transfert, pour une connexion via satellite avec retour terrestre ;
- la figure 4 représente la trace des paquets émis et acquittements reçus pour l'émetteur de la figure 3, pour une plus grande durée ;
- la figure 5 représente différentes positions de la fenêtre glissante d'émission de l'émetteur suivant le protocole TCP,
- la figure 6 représente la trace des paquets émis et acquittements reçus d'un l'émetteur TCP selon l'état de la technique pour une connexion via satellite avec retour terrestre analogue à celle selon la figure 3 ;
- les figures 7 et 8 représentent respectivement l'évolution de la fenêtre d'émission et du débit d'émission dans le cas de l'émetteur de l'état de la technique suivant la figure 6 ;
- la figure 9 représente la trace des paquets émis et acquittements reçus d'un émetteur TCP mettant en oeuvre le procédé d'émission suivant l'invention pour une connexion via un réseau téléphonique GPRS ;
- la figure 10 représente la fenêtre d'émission correspondant à l'émetteur mettant en oeuvre le procédé d'émission suivant l'invention dans le cas de la figure 9 ;
- la figure 11 représente la trace des paquets émis et acquittements reçus d'un émetteur TCP mettant en oeuvre un procédé d'émission suivant l'état de la technique pour une connexion via un réseau téléphonique GPRS, analogue à celle selon la figure 9 ; et
- la figure 12 représente l'évolution de la fenêtre d'émission correspondant à l'émetteur TCP de l'état de la technique pour la connexion via le réseau téléphonique GPRS suivant la figure 11.

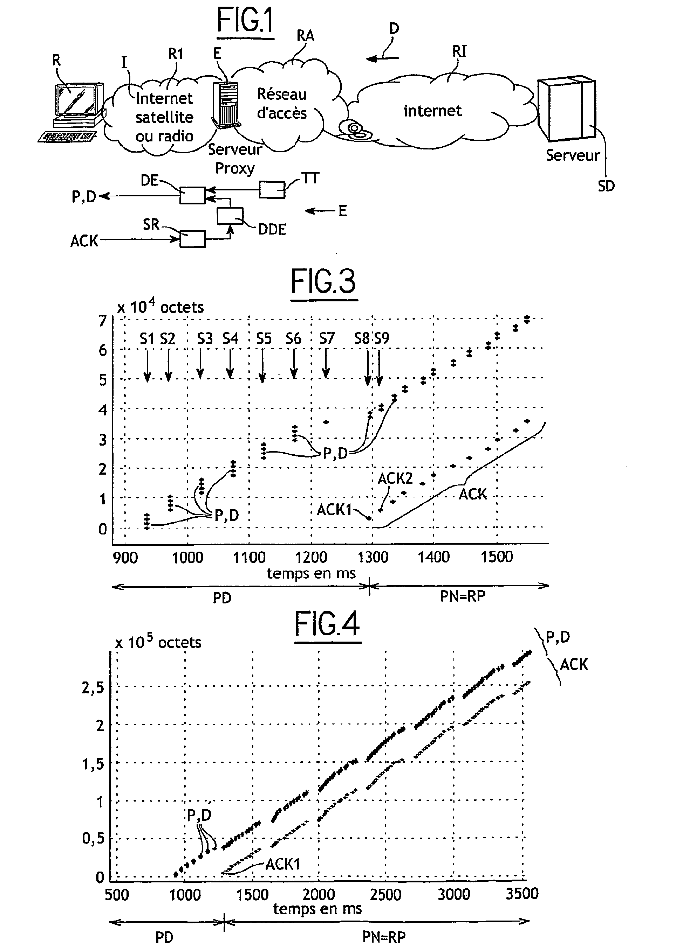

A la figure 1, un terminal requérant **R** demande des données à un serveur **E** par un premier réseau **R1** de télécommunication. Le premier réseau **R1** de télécommunication est par exemple un réseau de télécommunication d'accès du récepteur **R** au serveur **E**, ce serveur **E** étant par exemple un serveur mandataire (ou en anglais : proxy) ou local, tel que celui de portails de fournisseur d'accès ou d'accélérateurs de débit. Le premier réseau **R1** de télécommunication comprend par exemple une interface **I** satellite ou radio (telle que par exemple GPRS). Le serveur **E** ayant reçu la demande de données du terminal **R** envoie à son tour par un réseau **RA** d'accès et par le réseau Internet **RI** une requête correspondante à un deuxième serveur distant **SD** hébergeant les données requises.

Le serveur **SD** de données achemine en mode paquet les données requises **D** au serveur **E** par les réseaux **RI** et **RA.** Le temps mis pour le trajet aller-retour de la requête du serveur **E** au deuxième serveur **SD** de données et des données requises **D** du serveur **SD** de données au serveur **E** est d'environ 100 millisecondes. En revanche, le temps d'aller-retour (ou temps RTT) entre l'émetteur **E** et le récepteur **R,** correspondant, lors du démarrage du transfert, au temps mis pour un paquet émis par l'émetteur **E** pour arriver par le premier réseau **R1** au récepteur **R,** auquel s'ajoute le temps mis pour qu'un acquittement de ce paquet parvienne du récepteur **R** à l'émetteur **E** par le premier réseau **R1** est plus long, de l'ordre de plus de 200 millisecondes et notamment de 300 millisecondes environ.

Vis-à-vis du terminal requérant **R,** le serveur **E** joue le rôle d'émetteur **E** de données pour envoyer les données requises **D** ayant été reçues du deuxième serveur **SD** de données au terminal requérant **R.** Le terminal requérant **R** est par exemple un ordinateur fixe ou mobile ou un téléphone mobile GPRS. L'émetteur **E** est par exemple un émetteur TCP, l'émetteur **E** et le récepteur **R** mettent en oeuvre par exemple le protocole de transmission TCP (protocole de contrôle de transmission ou en anglais Transmission Control Protocol). L'émetteur **E** comporte un dispositif d'émission de paquets muni de moyens adaptés pour mettre en oeuvre le procédé suivant l'invention, comprenant par exemple une horloge. Le terminal requérant **R** joue le rôle de récepteur **R** des données émises en mode paquets par l'émetteur **E** par la connexion établie par le premier réseau de télécommunication **R1.**

Suivant l'invention, pendant une phase initiale **PD** de départ, transitoire, représentée aux figures 3 et 4, l'émetteur **E** émet plusieurs salves de paquets **P** de données **D,** et par exemple à la figure 3, sept salves **S1, S2, S3, S4, S5, S6** et **S7** de paquets **P** de données **D.** Les salves **S1** à **S7** sont émises par l'émetteur **E** en étant séparées par des intervalles de temps prescrits. Chaque salve **S1** à **S7** comporte au maximum un nombre prescrit de paquets, pouvant varier d'une salve à l'autre, ou être égal à **N** à chaque salve dans les exemples décrits ci-dessous, les paquets d'une salve étant émis au même instant. Le nombre de paquets maximum de chaque salve est par exemple supérieur ou égal à trois dans le cas d'une connexion satellite et supérieur ou égal à un ou deux dans le cas d'une connexion GPRS.

Par exemple, aux figures, chaque paquet **P** de données est de 1 500 octets et chaque salve comporte au maximum quatre paquets, comme pour les salves **S1, S2, S3, S4, S5** et **S6,** la dernière salve **S7** comporte un seul paquet, étant donné que dans l'exemple représenté aux figures 3 et 4, le tampon de mémoire de l'émetteur **E** ne comporte plus de paquets **P** à émettre à ce moment et comportait initialement 25 paquets à émettre. Dans le mode de réalisation représenté aux figures 3 et 4, les salves sont émises périodiquement avec une période **T** de par exemple 50 millisecondes pour un nombre **N** de paquets égal à quatre pour chaque salve **S1** à **S6** dans le cas d'une connexion via satellite avec retour terrestre dans le premier réseau **R1** de télécommunication. Cette période **T** et ce nombre prédéfini **N** de paquets à émettre sont par exemple configurables par l'administrateur.

Dans le cas où la connexion emprunte une liaison GPRS, dans un premier exemple la période **T** est de 300 millisecondes et chaque salve est constituée de 2 paquets à émettre et dans un deuxième exemple la période **T** est de 100 millisecondes et chaque salve est constituée de 1 paquet à émettre.

L'émetteur **E** comporte une fenêtre **F** d'émission, qui est définie par la quantité de données des paquets **P** qu'il a envoyé au récepteur **R** et pour lesquels aucun acquittement **ACK** émis par le récepteur **R** et correspondant au premier paquet **P** émis de la fenêtre **F** n'a encore été reçu par l'émetteur **E.** Les termes premier paquet **P** et premier acquittement **ACK** s'entendent dans ce qui suit du paquet **P** et de l'acquittement **ACK** qui ont été émis les premiers dans l'ordre chronologique respectivement par l'émetteur **E** et par le récepteur **R.** Le premier paquet **P** de la fenêtre **F** est habituellement celui ayant le numéro le plus bas dans celle-ci. Par conséquent, cette fenêtre **F** d'émission correspond à ceux des paquets **P** qui ont été émis par l'émetteur **E** mais qui n'ont pas été acquittés par le récepteur **R** et correspond au cumul des paquets envoyés. La fenêtre **F** d'émission est utilisée par l'émetteur **E** pour conserver une cohérence en cas de perte de paquets **P** émis et est une variable d'état de l'émetteur **E.** L'émetteur **E** comporte des moyens pour surveiller la valeur prise par la fenêtre **F** d'émission.

Ainsi, pendant la phase **PD** de départ, la fenêtre **F** d'émission est incrémentée suivant l'invention à chaque salve par le nombre de paquets **P** contenus dans chaque salve émise, pour devenir égale à une nouvelle valeur **F'** d'émission de la fenêtre **F** d'émission.

Par conséquent, la fenêtre **F** d'émission est incrémentée de **N** paquets à chaque période **T,** dans le cas où les salves sont périodiques et comportent chacune **N** paquets comme aux figures 3 et 4.

L'émission par l'émetteur **E** des salves de paquets **P** est interrompue par la réception par l'émetteur **E** du premier acquittement **ACK** du récepteur **R,** correspondant à l'un des paquets **P** émis de la fenêtre **F.**

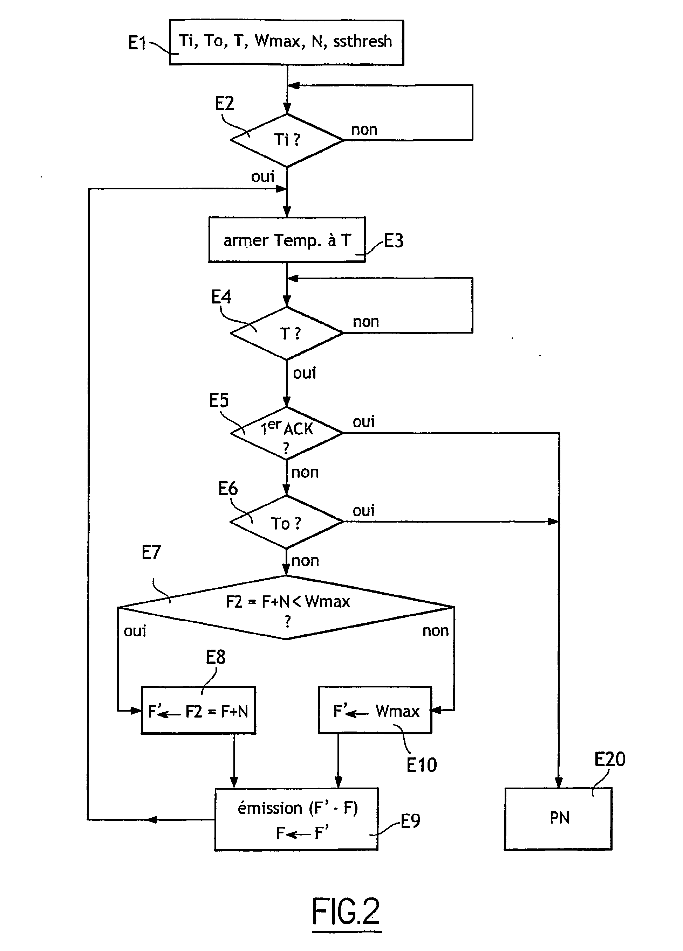

Le procédé d'émission suivant l'invention se déroule par exemple de la manière suivante, en référence à la figure 2, par des moyens techniques automatiques prévus sur l'émetteur **E.**

L'émetteur **E** comporte par exemple un temporisateur **TT** d'une durée **T** de déclenchement, ou temporisateur de lissage.

Lors d'une première étape **E1** d'initialisation, on initialise sur l'émetteur **E**,
- un temps **Ti** d'attente du temporisateur **TT** pendant la phase de départ,
- un temps **To** d'arrêt,
- la durée **T** de déclenchement du temporisateur **TT** pendant la phase de départ,
- un premier seuil **Wmax** prédéterminé et de valeur finie, représentant le nombre maximum autorisé de paquets pour la fenêtre **F** d'émission,
- un deuxième seuil **ssthresh** prédéterminé et de valeur finie, représentant la frontière entre la phase de départ lent (« slow start ») et la phase d'évitement de congestion (« congestion avoidance ») ultérieurement à la phase **PD** de départ, et
- le nombre **N** de paquets **P** de chaque salve à émettre par l'émetteur **E** pendant la phase de départ.

Aucun paquet n'étant encore émis à l'étape **E1** par l'émetteur **E,** la fenêtre **F** est initialisée à zéro. Le temps **Ti** d'attente correspond au temps nécessaire à l'émetteur **E** pour pouvoir commencer l'émission des paquets. Pour un serveur **E**, c'est l'équivalent par exemple de deux fois le temps aller-retour sur le réseau Internet, c'est-à-dire le temps pour l'établissement de la connexion vers le serveur de données **SD** sur le réseau Internet auquel s'ajoute le temps pour l'émission de la requête du serveur au serveur de données **SD** et pour le début de la réception par le serveur **E** des paquets **P** de données utiles à retransmettre au récepteur **R.** Le temps **To** d'arrêt correspond au temps pour arrêter la phase **PD** de départ si aucun acquittement **ACK** n'est reçu du récepteur **R** par l'émetteur **E** et correspond par exemple au temps de retransmission **RTO.**

L'émetteur **E** surveille d'abord à l'étape **E2** suivante si le temps **Ti** d'attente est passé depuis un instant initial de départ de la phase **PD,** déterminé par exemple par l'instant d'émission de la première demande de données du récepteur **R** à l'émetteur **E.** Dans la négative, il est repassé à l'étape **E2** et dans l'affirmative, il est passé à l'étape suivante **E3.**

A l'étape **E3,** on arme le temporisateur **TT** de l'émetteur **E** à la durée **T,** puis on passe à l'étape **E4,** au cours de laquelle l'émetteur **E** surveille si la durée **T** après la fin du temps **Ti** est écoulée dans le temporisateur **TT.** Dans la négative, il est repassé à l'étape **E4,** et dans l'affirmative, il est passé à l'étape suivante **E5.**

Au cours de cette étape **E5** (première étape de contrôle), l'émetteur **E** surveille si il a reçu le premier acquittement **ACK (ACK1** aux figures) du récepteur **R** dans l'ordre chronologique. Dans l'affirmative, il est passé à une étape **E20,** mettant fin à la première phase **PD** de départ et correspondant à une deuxième phase **PN** succédant à cette phase **PD** de départ, qui sera décrite ci-dessous.

Dans la négative à l'étape **E5,** l'émetteur **E** passe à l'étape suivante **E6** (deuxième étape de contrôle) au cours de laquelle l'émetteur **E** surveille si le temps **To** d'arrêt est écoulé. Dans l'affirmative, il est passé à l'étape **E20** correspondant à la deuxième phase **PN** et dans la négative, il est passé à l'étape **E7.**

Au cours de cette étape **E7** (troisième étape de contrôle), l'émetteur **E** contrôle si la nouvelle valeur **F2** prévue de la fenêtre **F** d'émission, qui est égale à son ancienne valeur **F** d'émission (ou valeur actuelle **F** de la fenêtre **F** d'émission), augmentée de l'incrément prédéterminé de paquets **P,** est inférieure au premier seuil **Wmax.** Dans l'exemple précédent, où l'incrément est de **N** paquets **P,** la nouvelle valeur **F2** prévue est égale à l'ancienne valeur **F** d'émission, augmentée de ces **N** paquets **P,** (F2= F+N) ainsi que cela est représenté à titre illustratif à la figure 2.

Dans l'affirmative à l'étape **E7,** c'est-à-dire si **F2** est inférieure à **Wmax,** il est passé à l'étape **E8** d'incrémentation prévue, au cours de laquelle la nouvelle valeur **F'** d'émission de la fenêtre **F** d'émission prend la nouvelle valeur prévue **F2,** soit F'=F+N dans l'exemple illustré.

Après l'étape **E8** d'incrémentation prévue, l'émetteur passe à l'étape **E9** d'émission, au cours de laquelle l'émetteur **E** émet en une salve (par exemple **S1)** un ou plusieurs paquets **P** à émettre en une quantité de données égale à la différence entre la nouvelle valeur **F'** d'émission de la fenêtre **F** d'émission et l'ancienne valeur **F** d'émission de la fenêtre **F** d'émission. Puis, après l'émission du ou des paquets **P** lors de l'étape **E9,** l'ancienne valeur **F** d'émission devient égale à la nouvelle valeur **F'** d'émission pour la fenêtre **F** d'émission, F=F' lors de l'étape **E9,** ainsi que cela est illustré à la figure 2.

Dans le cas précédent où l'étape **E8** d'incrémentation prévue a été exécutée pour arriver à l'étape **E9** d'émission, l'émetteur **E** émet donc dans l'exemple illustré F'-F=N paquets **P** de la première salve **S1** lors de l'étape **E9.**

Dans la négative à l'étape **E7,** c'est-à-dire si la nouvelle valeur **F2** prévue est supérieure ou égale au premier seuil **Wmax,** il est passé à l'étape **E10** d'incrémentation limitée, au cours de laquelle la nouvelle valeur **F'** d'émission de la fenêtre **F** d'émission prend le premier seuil **Wmax.**

Après l'étape **E10** d'incrémentation limitée, l'émetteur **E** passe à l'étape **E9** d'émission décrite ci-dessus. Dans le cas précédent où l'étape **E10** d'incrémentation limitée a été exécutée pour arriver à l'étape **E9** d'émission, l'émetteur **E** émet donc dans l'exemple illustré F'-F=Wmax-F paquets **P** lors de cette étape **E9.**

Le premier seuil **Wmax** de la fenêtre **F** est prescrit dans l'émetteur **E** et correspond par exemple à la bande passante **BP** de la connexion entre l'émetteur **E** et le récepteur **R.** La vérification de l'étape **E7** correspond ainsi par exemple au fait que la quantité de données **D** dans chaque salve, divisée par l'intervalle de temps par rapport à la salve précédente (ou par rapport à la fin du temps **Ti** pour la première salve) est inférieur à la bande passante **BP** de la connexion, c'est-à-dire N x MTU / T ≤ BP dans l'exemple décrit ci-dessus.

Après l'étape **E9** d'émission, l'émetteur **E** retourne à l'étape **E3** pour réarmer le temporisateur **TT** à la durée **T.**

Par conséquent, à chaque cycle **E3** à **E9** de la phase **PD** de départ, la fenêtre F d'émission de l'émetteur **E** est augmentée de **N** paquets **P** à émettre et une salve **S1** à **S6** de **N** paquets ou la salve **S7** sont envoyées de l'émetteur **E** au récepteur **R** successivement à chaque étape **E9** d'émission de chaque cycle, chaque cycle **E3** à **E9** supposant l'affirmative à l'étape **E4** et la négative aux étapes **E5** et **E6.**

Lorsque l'émetteur **E** a passé une fois au cours d'un cycle **E3** à **E9** à l'étape **E10** d'incrémentation limitée, il y retourne aux cycles suivants **E3** à **E9,** où aucun paquet, ni salve, n'est plus émis au cours de l'étape **E9** d'émission, étant donné qu'à chaque fois F=F'= Wmax.

Les paramètres indiqués ci-dessus de l'émetteur **E** sont choisis pour que le premier seuil **Wmax** soit atteint par la fenêtre **F** pendant la phase **PD** de départ.

Dans la deuxième phase **PN** correspondant à l'étape **E20,** l'émetteur E émet une seule salve d'un ou de plusieurs paquets et attend d'avoir reçu un ou plusieurs acquittement(s) **ACK** du récepteur **R,** avant d'émettre une nouvelle salve.

La deuxième phase **PN** postérieure à la phase de départ se déroule par exemple suivant le protocole TCP et les mécanismes de départ lent (« slow start ») et d'évitement de congestion (« congestion avoidance ») indiqués ci-dessus, ces mécanismes étant par exemple décrits dans les documents RFC 2001 et RFC 2581 du groupe de travail IETF (groupe de travail sur le réseau Internet, ou Internet Engineering Task Force), auxquels il est fait référence ici, RFC signifiant en anglais « Request For Comments » et étant des publications de référence portant sur le réseau Internet. L'émetteur **E** revient donc dans la deuxième phase **PN** par exemple au cas classique de départ lent (« slow start ») et/ou d'évitement de congestion (« congestion avoidance »), c'est-à-dire au cas normal du protocole TCP dans l'exemple illustré. Ainsi, les contrôles effectués selon le protocole TCP le sont également pendant la deuxième phase **PN** postérieure à la phase de départ.

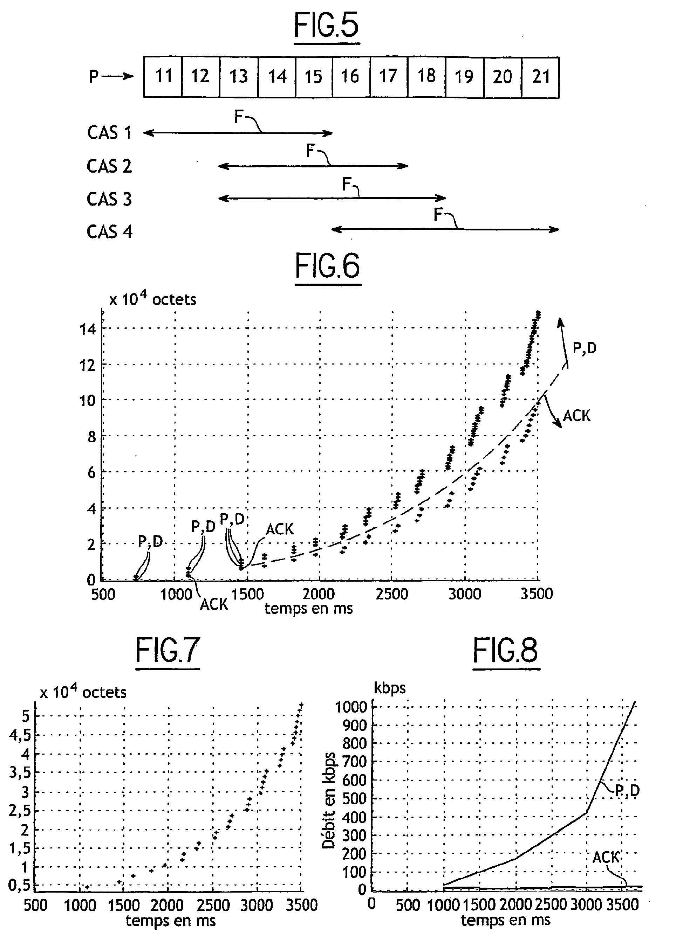

Chaque acquittement **ACK, ACK1, ACK2** reçu par l'émetteur **E** correspond par exemple à la réception par le récepteur **R** d'un ou de plusieurs paquets **P** émis par l'émetteur **E**, par exemple par le fait que ces acquittements **ACK, ACK1, ACK2** portent le numéro du dernier paquet reçu ou, dans l'exemple ci-dessous, du numéro suivant le numéro du dernier paquet reçu. Par conséquent, si la fenêtre **F** d'émission est constituée à la figure 5 des paquets **P** émis successivement ayant les numéros 11, 12, 13, 14, 15 (cas 1 à la figure 5), l'acquittement **ACK** portant le numéro 13 indiquera que les deux paquets de numéros 11 et 12 ont bien été reçus par le récepteur **R.** L'émetteur **E** en conclura que les paquets de numéros 11 et 12 ont bien été reçus par le récepteur **R** et fera avancer sa fenêtre **F** d'émission du nombre correspondant de paquets acquittés par l'acquittement **ACK** portant le numéro 13, c'est-à-dire de deux paquets. La fenêtre **F** d'émission comprendra alors les paquets de numéros 13, 14, 15 et les deux paquets suivants de numéros 16 et 17 dans le tampon de l'émetteur **E**, et émettra donc ce nombre correspondant de paquets ayant été acquittés par l'acquittement précédent **ACK,** en une seule salve des deux paquets de numéros 16 et 17 (cas 2 à la figure 5).

Dans le cas de la phase de départ lent (« slow start »), la fenêtre **F** d'émission de l'émetteur **E** est en outre avancée en supplément d'un paquet **P** à chaque acquittement reçu. Par conséquent, dans l'exemple ci-dessus, la fenêtre **F** d'émission comprendra en plus le paquet numéro 18 suivant dans le tampon de l'émetteur **E** et sera constituée des paquets de numéros 13, 14, 15, 16, 17 et 18, et les paquets de numéros 16, 17 et 18 seront émis dans ladite seule salve par l'émetteur **E** (cas 3 à la figure 5).

Dans le cas de la phase d'évitement de congestion (« congestion avoidance »), la fenêtre **F** d'émission de l'émetteur **E** n'est en outre avancée en supplément d'un paquet **P** que lorsque tous les paquets de la fenêtre **F** d'émission ont été acquittés par le récepteur **R,** c'est-à-dire lorsque l'émetteur **E** a reçu du récepteur **R** un acquittement **ACK, ACK1, ACK2** pour tous les paquets de la fenêtre **F** d'émission. Par conséquent dans ce cas, tant que l'émetteur **E** n'aura pas reçu d'acquittement pour la fenêtre entière **F**, l'émetteur **E** ne fera avancer sa fenêtre **F** d'émission que du nombre correspondant de paquets acquittés par l'acquittement **ACK, ACK1, ACK2** précédent, c'est-à-dire de deux paquets dans l'exemple précédent pour ne comprendre que les paquets 13, 14, 15, 16, 17 et n'émettre que les paquets de numéros 16 et 17 dans ladite seule salve (cas 2 à la figure 5). Lorsque l'émetteur **E** a reçu du récepteur **R** un acquittement **ACK**, **ACK1, ACK2** pour tous les paquets de numéro 11, 12, 13, 14, 15 de la fenêtre **F** d'émission, la fenêtre **F** d'émission est avancée en supplément d'un paquet pour être constituée des paquets de numéro 16, 17, 18, 19, 20 et du paquet supplémentaire 21 (cas 4 à la figure 5). Les paquets non encore émis 20 et 21 de cette fenêtre **F** le sont dans ladite seule salve.

Le deuxième seuil **ssthresh** est par exemple prédéterminé à l'étape **E1** d'initialisation à une valeur finie, inférieure au premier seuil **Wmax.** Le deuxième seuil **ssthresh** est par exemple prédéterminé à :
ssthresh = ¾.Wmax

Lorsque l'émetteur **E** passe à l'étape **E20,** sa fenêtre **F** d'émission reste à la valeur **F** d'émission atteinte précédemment lors de phase **PD** de départ. Ainsi, si cette fenêtre **F** d'émission a atteint **Wmax** lors de la phase **PD** de départ, ou a atteint une valeur **F** d'émission supérieure au deuxième seuil **ssthresh** lors de la première phase **PD** de départ, l'émetteur **E** passera automatiquement en régime permanent **RP** d'évitement de congestion lors de la deuxième phase **PN** à l'étape **E20** (PN=RP aux figures).

Dans l'exemple de la figure 3, l'émetteur **E** se trouve en phase **RP** de régime permanent d'évitement de congestion après la réception du premier acquittement **ACK1,** lequel acquitte en l'occurrence les deux premiers paquets de la salve **S1,** ce qui fait que deux nouveaux paquets sont émis par l'émetteur **E** dans la salve **S8** après la réception de cet acquittement **ACK1.** L'émetteur **E** n'émet plus d'autres paquets, avant d'avoir reçu un autre acquittement **ACK2** pour les paquets émis. L'acquittement **ACK2** acquitte les deux derniers paquets de la salve **S1** et l'émetteur **E** émet la nouvelle salve **S9** de deux nouveaux paquets et ainsi de suite à chaque nouvel acquittement **ACK** reçu. Ainsi, à la figure 3, l'émetteur **E** n'émet que 2 paquets à chaque salve pendant la deuxième phase **PN** de régime permanent **RP** d'évitement de congestion et attend d'avoir reçu un acquittement **ACK** du récepteur **R** après l'émission de cette salve pour émettre la salve suivante également de deux paquets.

Lors de la deuxième phase **PN** à l'étape **E20,** après avoir reçu un acquittement **ACK** du récepteur **R,** l'émetteur **E** émet une seule salve suivante d'un ou de plusieurs paquets et attend d'avoir reçu un ou plusieurs acquittement(s) **ACK** avant d'émettre une seule nouvelle salve d'un ou de plusieurs paquets. On notera que le premier acquittement **ACK1** interrompant la phase **PD** de départ met beaucoup plus de temps à arriver que le deuxième acquittement **ACK2,** qui suit immédiatement ce premier acquittement **ACK1.**

A la figure 1, le dispositif d'émission de paquets prévu sur l'émetteur **E** comporte :
- un moyen **SR** pour surveiller la réception par l'émetteur **E** du premier acquittement **ACK1** du récepteur **R,**
- un moyen **DE** de déclenchement d'émissions successives pour déclencher l'émission par l'émetteur **E**, aux intervalles **(T)** de temps prescrits successifs pendant la phase de départ **PD,** des salves **(S1** à **S7** à la figure 3) de nombres (N) prescrits de paquets **P,** pour incrémenter de ce nombre prescrit **(N)** de paquets de la salve correspondante **S1** à **S7 la** fenêtre **F** d'émission de l'émetteur **E** à chacun de ces intervalles **(T)** de temps,
- un moyen **DDE** pour désactiver ledit moyen **DE** de déclenchement d'émissions successives, lorsque le moyen **SR** de surveillance de réception indique que le premier acquittement **ACK1** du récepteur **R** a été reçu par l'émetteur **E.**

Aux figures 3 et 4, le temps **Ti** est de 880 millisecondes environ (dont 2 allers-retours vers le réseau Internet, qui représentent chacun 100 millisecondes), **Wmax** = 30 paquets, ssthresh = 22,5 paquets, **To** = 1250 millisecondes, **N** = 4 paquets et **T** = 50 millisecondes, ce qui représente un débit moyen de 960 kbit/s pour une bande passante de 2 Mbit/s dans le cas d'une liaison satellite avec retour terrestre, dont le temps aller-retour **(RTT)** est de 400 millisecondes. La figure 4 montre qu'à l'instant 3,5 secondes, la quantité totale des données transmises au récepteur **R** est de presque 300 Ko, soit le double de la quantité transmise par rapport au cas de l'état de la technique de la figure 6, où la quantité totale des données transmises est d'environ 140 Ko, représentant un débit moyen de 320 kbit/s. La fenêtre **F** à l'instant 1,2 seconde est de presque 40 Ko au lieu de 3 Ko à la figure 7. Ainsi, dans le cas des figures 3 et 4, il faut à l'émetteur **E** moins de 1,2 seconde depuis le début du transfert pour atteindre un débit de 1 Mbit/s au lieu de 3,5 secondes dans le cas de l'état de la technique des figures 6 à 8.

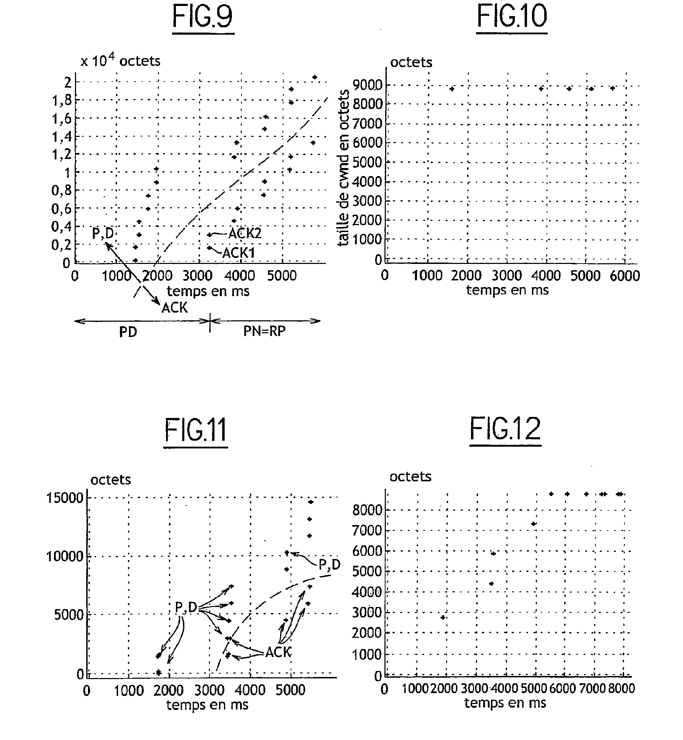

Sur les liaisons à long délai et à bande passante étroite, comme les liaisons GPRS, la bande passante **BP** maximale est d'une quarantaine de kbit/s pour un délai aller-retour d'un minimum de 2 secondes (pour des paquets IP de 1 500 octets). **N** = 2 paquets sont transmis dans chaque salve toutes les **T** = 100 millisecondes pendant la première phase **PD** de départ aux figures 9 et 10. A l'instant 5,5 secondes, la quantité de données transmise par l'émetteur est de presque 20 Ko au lieu de presque 15 Ko à la figure 11 et la fenêtre **F** d'émission croît beaucoup plus rapidement à la figure 10 qu'à la figure 12.

Les intervalles de temps prévus suivant l'invention entre les salves émises permettent de lisser l'émission de la première fenêtre **F** pendant la phase **PD** de départ pour éviter des débits crêtes trop grands et pour que les acquittements **ACK** dans les trajets d'aller-retour **(RTT :** en anglais "Round Trip Time") arrivent étalés sur tout le délai aller-retour, ce qui permet d'améliorer la régularité de la transmission.

A l'étape **E20,** le temporisateur **TT** est désarmé et l'émetteur **E** revient au cas classique de régime permanent d'évitement de congestion.

Le régime permanent est donc atteint plus rapidement et en ayant transmis un plus grand nombre de paquets en régime transitoire que dans le cas de l'état de la technique.

## Revendications

1. Procédé d'émission de paquets (P) de données d'un émetteur (E) à destination d'un récepteur (R) par une connexion établie dans un réseau (R1) de télécommunication, l'émetteur (E) comportant une fenêtre (F) d'émission de paquets (P) de données, définie par la quantité de données des paquets (P) qui ont été émis et pour lesquels aucun acquittement (ACK) correspondant au premier paquet (P) dans l'ordre chronologique d'émission n'a encore été reçu du récepteur (R),
**caractérisé en ce que** pendant une phase de départ (PD) survenant avant que l'émetteur (E) ne reçoive du récepteur (R) le premier acquittement (ACK) dans l'ordre chronologique, l'émetteur (E) émet à destination du récepteur (R) par la connexion établie dans le réseau de télécommunication, à plusieurs intervalles de temps successifs prescrits pendant la phase de départ (PD), des salves (S1 à 57) de nombres (N) prescrits d'au moins un paquet (P), et incrémente a chaque intervalle de temps prescrit successivement la fenêtre (F) d'émission de ces nombres prescrits de paquets (P).

2. Procédé d'émission de paquets suivant la revendication 1, **caractérisé en ce que** les salves (S1 à 57) de paquets émises pendant la phase (PD) de départ sont telles que la quantité de données de chaque salve (S1 à 57) divisée par l'intervalle de temps par rapport à la salve précédente est inférieure à la bande passante BP de la connexion pour chaque récepteur (R).

3. Procédé d'émission de paquets suivant l'une quelconque des revendications précédentes, **caractérisé en ce que** les intervalles de temps sont une même période T prédéterminée et chaque salve (S1 à 57) est constituée d'un même nombre prédéfini N de paquets (P) à émettre.

4. Procédé d'émission de paquets suivant les revendications 2 et 3, **caractérisé en ce que** les paquets (P) des salves émises pendant la phase (PD) de départ possèdent la même quantité MTU de données et vérifient l'équation pour chaque récepteur:
N.MTU/T < BP.

5. Procédé d'émission de paquets suivant l'une quelconque des revendications 3 et 4, **caractérisé en ce que** l'émetteur (E) comporte un temporisateur (TT) d'émission réglé sur la période prédéterminée pour effectuer ladite surveillance (E4) de l'arrivée de chaque période.

6. Procédé d'émission de paquets suivant l'une quelconque des revendications précédentes, **caractérisé en ce que** l'émetteur (E) surveille pendant la phase (PD) de départ à chaque intervalle de temps prescrit, dans une première étape (E5) de contrôle, si le premier acquittement (ACK) a été reçu, pour permettre l'émission (E9) desdites salves (S1 à S7) et l'incrémentation de la fenêtre (F) d'émission desdits nombres prescrits (N) de paquets pendant la phase de départ (PD) dans le cas où au moins le premier contrôle est négatif, et, dans le cas où le premier contrôle est positif, l'émetteur (E) met fin à la phase (PD) de départ, émet (E20) au cours d'une deuxième phase (PN) postérieure à la phase (PD) de départ une seule autre salve d'au moins un paquet à émettre et attend, avant d'émettre une nouvelle salve d'au moins un paquet à émettre et chaque salve suivante, d'avoir reçu au moins un acquittement (ACK) du récepteur (R) pour la salve précédente.

7. Procédé d'émission de paquets suivant l'une quelconque des revendications précédentes, **caractérisé en ce que** l'émetteur (E) surveille pendant la phase (PD) de départ à chaque intervalle de temps prescrit, dans une deuxième étape (E6) de contrôle, si un temps prescrit (To) depuis un instant initial est écoulé, pour permettre l'émission (E9) desdites salves (S1 à S7) et l'incrémentation de la fenêtre (F) d'émission desdits nombres prescrits (N) de paquets pendant la phase de départ (PD) dans le cas où au moins le deuxième contrôle est négatif, et, dans le cas où le deuxième contrôle est positif, l'émetteur (E) met fin à la phase (PD) de départ, émet (E20) au cours d'une deuxième phase (PN) postérieure à la phase (PD) de départ une seule autre salve d'au moins un paquet à émettre et attend, avant d'émettre une nouvelle salve d'au moins un paquet à émettre et chaque salve suivante, d'avoir reçu au moins un acquittement (ACK) du récepteur (R) pour la salve précédente.

8. Procédé d'émission de paquets suivant la revendication 6 ou 7, **caractérisé en ce que** la deuxième phase (PN) postérieure à la phase (PD) se déroule selon le protocole TCP et le mécanisme de départ lent, dans lequel la fenêtre (F) d'émission est augmentée d'un paquet (P) à chaque acquittement reçu (ACK), et/ou selon le mécanisme d'évitement de congestion, dans lequel la fenêtre (F) d'émission est augmentée d'un paquet (P) à chaque acquittement reçu (ACK) pour la fenêtre entière (F) d'émission, le mécanisme de départ lent ayant lieu lorsque la fenêtre (F) d'émission a une taille inférieure ou égale à un deuxième seuil prescrit ssthresh de valeur finie, et le mécanisme d'évitement de congestion ayant lieu lorsque la fenêtre (F) d'émission a une taille supérieure à ce deuxième seuil prescrit ssthresh.

9. Procédé d'émission de paquets suivant l'une quelconque des revendications 6 à 8, **caractérisé en ce que** lors du passage de l'émetteur (E) de la phase de départ (PD) à la deuxième phase (PN), la fenêtre (F) d'émission de celui-ci reste à la valeur (F) atteinte précédemment lors de la phase (PD) de départ.

10. Procédé d'émission de paquets suivant l'une quelconque des revendications précédentes, **caractérisé en ce que** la quantité de données des salves (S1 à S7) émises par l'émetteur (E) pendant la phase (PD) de départ est limitée à un premier seuil Wmax de valeur finie.

11. Procédé d'émission de paquets suivant les revendications 8, 9 et 10 prises ensemble, **caractérisé en ce que** le deuxième seuil prescrit ssthresh est inférieur au premier seuil Wmax.

12. Procédé d'émission de paquets suivant la revendication 11, **caractérisé en ce que** le deuxième seuil prescrit ssthresh est prescrit à une valeur finie, égale à environ trois quarts du premier seuil Wmax.

13. Procédé d'émission de paquets suivant l'une quelconque des revendications 10 à 12, **caractérisé en ce que** le premier seuil Wmax est prescrit en fonction des intervalles (T) de temps et de la bande passante de la connexion pour chaque récepteur (R).

14. Procédé d'émission de paquets suivant l'une quelconque des revendications 10 à 13, **caractérisé en ce que** l'émetteur (E) contrôle pendant la phase (PD) de départ à chaque intervalle de temps prescrit, dans une troisième étape (E7) de contrôle, si une valeur prévue (F2) de la fenêtre d'émission, qui est égale à la valeur (F) de la fenêtre d'émission, augmentée de l'incrément prescrit de paquets (P), est inférieure au premier seuil (Wmax) prédétenniné, pour que ladite émission (E9) de la salve (S1 à S7) correspondant à l'intervalle de temps soit de cet incrément (N) de paquets (P) dans le cas où le troisième contrôle est positif (E8), et pour que ladite émission (E9) de la salve (S1 à S7) correspondant à l'intervalle de temps soit de la différence entre le premier seuil et la valeur (F) de la fenêtre d'émission dans le cas où le troisième contrôle est négatif (E10), la valeur (F) de la fenêtre d'émission étant incrémentée du nombre de paquets de la salve émise (S1 à S7).

15. Procédé d'émission de paquets suivant l'une quelconque des revendications précédentes, **caractérisé en ce que** la connexion établie dans le réseau (RI) de télécommunication possède un temps de trajet aller-retour entre l'émetteur (E) et le récepteur (R) d'au moins 200 millisecondes.

16. Émetteur (E) comportant une fenêtre (F) d'émission de paquets de données, définie par la quantité de données des paquets (P) qui ont été émis et pour lesquels aucun acquittement (ACK) correspondant au premier paquet (P) dans l'ordre chronologique d'émission n'a encore été reçu du récepteur (R),
**caractérisé en ce que** ledit émetteur comprend un dispositif d'émission de paquets comportant:
- un moyen (SR) pour surveiller la réception par l'émetteur (E) du premier acquittement du récepteur (R) dans l'ordre chronologique,
- un moyen (DE) de déclenchement d'émissions successives pour déclencher l'émission par l'émetteur (E), à plusieurs intervalles de temps prescrits successifs pendant la phase de départ (PD), de salves (S1 à S7) de nombres prescrits d'au moins un paquet (P), pour incrémenter à chaque intervalle de temps prescrit la fenêtre (F) d'émission de l'émetteur (E) du nombre prescrit de paquets de la salve correspondante,
- un moyen (DDE) pour désactiver ledit moyen (DE) de déclenchement d'émissions successives, lorsque le moyen (SR) de surveillance de réception indique que le premier acquittement (ACK) du récepteur (R) a été reçu par l'émetteur (E).

## Claims

1. Method for sending data packets (P) from a sender (E) to a receiver (R) through a connection established in a telecommunication network (Rl), the sender (E) comprising a data packets (P) send window (F), defined by the quantity of data of the packets (P) which have been sent and for which packets no acknowledgement (ACK) corresponding to the first packet (P) in chronological order of sending has yet been received from the receiver (R),
**characterized in that** during a start phase (PD) occurring before the sender (E) receives from the receiver (R) the first acknowledgement (ACK) in chronological order, the sender (E) sends to the receiver (R) through the connection established in the telecommunication network, at several prescribed successive time intervals during the start phase (PD), bursts (S1 to S7) of prescribed numbers (N) of at least one packet (P), and at each prescribed time interval it increments successively the window (F) by these prescribed numbers of packets (P).

2. Method for sending packets according to Claim 1, **characterized in that** the bursts (S1 to S7) of packets sent during the start phase (PD) are such that the quantity of data of each burst (S1 to S7) divided by the time interval with respect to the previous burst is less than the bandwidth BP of the connection for each receiver (R).

3. Method for sending packets according to any one of the preceding claims, **characterized in that** the time intervals are one and the same predetermined period T and each burst (S1 to S7) consists of one and the same predefined number N of packets (P) to be sent.

4. Method for sending packets according to Claims 2 and 3, **characterized in that** the packets (P) of the bursts sent during the start phase (PD) possess the same quantity MTU of data and satisfy the equation for each receiver:
N.MTU/T < BP.

5. Method for sending packets according to any one of Claims 3 and 4, **characterized in that** the sender (E) comprises a send timer (TT) adjusted to the predetermined period so as to perform the said monitoring (E4) of the arrival of each period.

6. Method for sending packets according to any one of the preceding claims, **characterized in that** the sender (E) monitors during the start phase (PD) at each prescribed time interval, in a first check step (E5), whether the first acknowledgement (ACK) has been received, so as to allow the sending (E9) of the said bursts (S1 to S7) and the incrementation of the window (F) for sending the said prescribed numbers (N) of packets during the start phase (PD) in the case where at least the first check is negative, and, in the case where the first check is positive, the sender (E) terminates the start phase (PD), sends (E20) in the course of a second phase (PN) posterior to the start phase (PD) a single other burst of at least one packet to be sent and waits, before sending a new burst of at least one packet to be sent and each following burst, to have received at least one acknowledgement (ACK) from the receiver (R) for the previous burst.

7. Method for sending packets according to any one of the preceding claims, **characterized in that** the sender (E) monitors during the start phase (PD) at each prescribed time interval (T), in a second check step (E6), whether a prescribed time (To) has elapsed since an initial instant, so as to allow the sending (E9) of the said bursts (S1 to S7) and the incrementation of the window (F) for sending the said prescribed numbers (N) of packets during the start phase (PD) in the case where at least the second check is negative, and, in the case where the second check is positive, the sender (E) terminates the start phase (PD), sends (E20) in the course of a second phase (PN) posterior to the start phase (PD) a single other burst of at least one packet to be sent and waits, before sending a new burst of at least one packet to be sent and each following burst, to have received at least one acknowledgement (ACK) from the receiver (R) for the previous burst.

8. Method for sending packets according to Claim 6 or 7, **characterized in that** the second phase (PN) posterior to the phase (PD) proceeds according to the TCP protocol and the slow start mechanism, in which the send window (F) is increased by a packet (P) with each acknowledgement received (ACK), and/or according to the congestion avoidance mechanism, in which the send window (F) is increased by a packet (P) with each acknowledgement received (ACK) for the entire send window (F), the slow start mechanism taking place when the send window (F) has a size less than or equal to a second prescribed threshold ssthresh of finite value, and the congestion avoidance mechanism taking place when the send window (F) has a size greater than this second prescribed threshold ssthresh.

9. Method for sending packets according to any one of Claims 6 to 8, **characterized in that** when the sender (E) goes from the start phase (PD) to the second phase (PN), the send window (F) thereof remains at the value (F) reached previously during the start phase (PD).

10. Method for sending packets according to any one of the preceding claims, **characterized in that** the quantity of data of the bursts (S1 to S7) sent by the sender (E) during the start phase (PD) is limited to a first threshold Wmax of finite value.

11. Method for sending packets according to Claims 8, 9 and 10 taken together, **characterized in that** the second prescribed threshold ssthresh is less than the first threshold Wmax.

12. Method for sending packets according to Claim 11, **characterized in that** the second prescribed threshold ssthresh is prescribed at a finite value, equal to about three quarters of the first threshold Wmax.

13. Method for sending packets according to any one of Claims 10 to 12, **characterized in that** the first threshold Wmax is prescribed as a function of the time intervals (T) and of the bandwidth of the connection for each receiver (R).

14. Method for sending packets according to any one of Claims 10 to 13, **characterized in that** the sender (E) checks during the start phase (PD) at each prescribed time interval, in a third check step (E7), whether an envisaged value (F2) of the send window, which is equal to the value (F) of the send window, increased by the prescribed increment of packets (P), is less than the first predetermined threshold (Wmax), so that the said sending (E9) of the burst (S1 to S7) corresponding to the time interval is of this increment (N) of packets (P) in the case where the third check is positive (E8), and so that the said sending (E9) of the burst (S1 to S7) corresponding to the time interval is of the difference between the first threshold and the value (F) of the send window in the case where the third check is negative (E10), the value (F) of the send window being incremented by the number of packets of the sent burst (S1 to S7).

15. Method for sending packets according to any one of the preceding claims, **characterized in that** the connection established in the telecommunication network (RI) possesses an outward-return journey time between the sender (E) and the receiver (R) of at least 200 milliseconds.

16. Sender (E) comprising a data packets send window (F), defined by the quantity of data of the packets (P) which have been sent and for which packets no acknowledgement (ACK) corresponding to the first packet (P) in chronological order of sending has yet been received from the receiver (R),
**characterized in that** the said sender comprises a device for sending packets comprising:
- a means (SR) for monitoring the receipt by the sender (E) of the first acknowledgement of the receiver (R) in chronological order,
- a means (DE) for triggering successive sends so as to trigger the sending by the sender (E), at several successive prescribed time intervals during the start phase (PD), of bursts (S1 to S7) of prescribed numbers of at least one packet (P), so as to increment at each prescribed time interval the send window (F) of the sender (E) by the prescribed number of packets of the corresponding burst,
- a means (DDE) for deactivating the said means (DE) for triggering successive sends, when the reception monitoring means (SR) indicates that the first acknowledgement (ACK) of the receiver (R) has been received by the sender (E).

## Patentansprüche

1. Verfahren zum Senden von Datenpaketen (P) von einem Sender (E) zu einem Empfänger (R) über eine in einem Telekommunikationsnetz (R1) eingerichtete Verbindung, wobei der Sender (E) ein Fenster (F) zum Senden von Datenpaketen (P) aufweist, das durch die Datenmenge der Pakete (P) bestimmt ist, die gesendet wurden und für die noch keine dem ersten Paket (P) in der zeitlichen Sendereihenfolge entsprechende Rückmeldung (ACK) vom Empfänger (R) empfangen wurde,
**dadurch gekennzeichnet, dass** der Sender (E) während einer Ausgangsphase (PD), die eintritt, bevor der Sender (E) vom Empfänger (R) die erste Rückmeldung (ACK) in der zeitlichen Reihenfolge empfängt, in mehreren aufeinander folgenden, während der Ausgangsphase (PD) vorgeschriebenen Zeitintervallen Bursts (S1 bis S7) von vorgeschriebenen Anzahlen (N) von mindestens einem Paket (P) über die im Telekommunikationsnetz eingerichtete Verbindung an den Empfänger (R) sendet und wiederholt das Fenster (F) zum Senden dieser vorgeschriebenen Anzahlen von Paketen (P) in jedem vorgeschriebenen Zeitintervall in Inkrementen vergrößert.

2. Verfahren zum Senden von Paketen nach Anspruch 1, **dadurch gekennzeichnet, dass** die Bursts (S1 bis S7) von während der Ausgangsphase (PD) gesendeten Paketen derart sind, dass die Datenmenge jedes Bursts (S1 bis S7) geteilt durch das Zeitintervall im Verhältnis zum vorhergehenden Burst kleiner ist als die Bandbreite BP der Verbindung für jeden Empfänger (R).

3. Verfahren zum Senden von Paketen nach einem der vorhergehenden Ansprüche, **dadurch gekennzeichnet, dass** die Zeitintervalle ein gleicher vorbestimmter Zeitraum T sind und jeder Burst (S1 bis S7) aus einer gleichen vorbestimmten Anzahl N von zu sendenden Paketen (P) besteht.

4. Verfahren zum Senden von Paketen nach Ansprüchen 2 und 3, **dadurch gekennzeichnet, dass** die Pakete (P) der während der Ausgangsphase (PD) gesendeten Bursts die gleiche Menge MTU an Daten besitzen und für jeden Empfänger die folgende Gleichung bestätigen:
N.MTU/T<BP.

5. Verfahren zum Senden von Paketen nach einem der Ansprüche 3 und 4, **dadurch gekennzeichnet, dass** der Sender (E) einen Sendezeitgeber (TT) aufweist, der auf den vorbestimmten Zeitraum eingestellt ist, um die Überwachung (E4) des Eintritts jedes Zeitraums durchzuführen.

6. Verfahren zum Senden von Paketen nach einem der vorhergehenden Ansprüche, **dadurch gekennzeichnet, dass** der Sender (E) während der Ausgangsphase (PD) in jedem vorgeschriebenen Zeitintervall in einem ersten Prüfschritt (E5) überwacht, ob die erste Rückmeldung (ACK) empfangen wurde, um das Senden (E9) der Bursts (S1 bis S7) und die Vergrößerung des Fensters (F) zum Senden der vorgeschriebenen Anzahlen (N) von Paketen während der Ausgangsphase (PD) um Inkremente zu ermöglichen, wenn mindestens das Ergebnis der ersten Prüfung negativ ist, und wenn das Ergebnis der ersten Prüfung positiv ist, beendet der Sender (E) die Ausgangsphase (PD), sendet (E20) während einer zweiten, der Ausgangsphase (PD) nachfolgenden Phase (PN) einen einzigen anderen Burst von mindestens einem zu sendenden Paket und wartet vor dem Senden eines neuen Bursts von mindestens einem zu sendenden Paket und jedes nachfolgenden Bursts bis zum Empfang von mindestens einer Rückmeldung (ACK) für den vorhergehenden Burst vom Empfänger (R).

7. Verfahren zum Senden von Paketen nach einem der vorhergehenden Ansprüche, **dadurch gekennzeichnet, dass** der Sender (E) während der Ausgangsphase (PD) bei jedem vorgeschriebenen Zeitintervall in einem zweiten Prüfschritt (E6) überwacht, ob eine vorgeschriebene Zeit (To) nach einem Anfangszeitpunkt vergangen ist, um das Senden (E9) der Bursts (S1 bis S7) und die Vergrößerung des Fensters (F) zum Senden der vorgeschriebenen Anzahlen (N) von Paketen während der Ausgangsphase (PD) um Inkremente zu ermöglichen, wenn das Ergebnis von mindestens der zweiten Prüfung negativ ist, und wenn das Ergebnis der zweiten Prüfung positiv ist, beendet der Sender (E) die Ausgangsphase (PD), sendet (E20) während einer zweiten, der Ausgangsphase (PD) nachfolgenden Phase (PN) einen einzigen anderen Burst von mindestens einem zu sendenden Paket und wartet vor dem Senden eines neuen Bursts von mindestens einem zu sendenden Paket und jedes nachfolgenden Bursts bis zum Empfang von mindestens einer Rückmeldung (ACK) für den vorhergehenden Burst vom Empfängers (R).

8. Verfahren zum Senden von Paketen nach Anspruch 6 oder 7, **dadurch gekennzeichnet, dass** die zweite, der Phase (PD) nachfolgende Phase (PN) gemäß dem TCP-Protokoll und dem Mechanismus des langsamen Starts, in dem das Sendefenster (F) bei jeder empfangenen Rückmeldung (ACK) um ein Paket (P) vergrößert wird, und/oder gemäß dem Mechanismus zur Vermeidung von Verstopfung abläuft, in dem das Sendefenster (F) bei jeder empfangenen Rückmeldung (ACK) für das gesamte Sendefenster (F) um ein Paket vergrößert wird, wobei der Mechanismus des langsamen Starts stattfindet, wenn das Sendefenster (F) eine Größe aufweist, die kleiner als oder gleich wie der zweite vorgeschriebene Schwellwert ssthresh mit einem endlichen Wert ist, und der Mechanismus zur Vermeidung von Verstopfung stattfindet, wenn das Sendefenster (F) eine Größe aufweist, die größer als dieser zweite vorgeschriebene Schwellwert ssthresh ist.

9. Verfahren zum Senden von Paketen nach einem der Ansprüche 6 bis 8, **dadurch gekennzeichnet, dass** bei einem Übergang des Senders (E) von der Ausgangsphase (PD) zur zweiten Phase (PN) das Sendefenster (F) des letzteren beim vorhergehend bei der Ausgangsphase (PD) erreichten Wert (F) bleibt.

10. Verfahren zum Senden von Paketen nach einem der vorhergehenden Ansprüche, **dadurch gekennzeichnet, dass** die Menge der Daten der Bursts (S1 bis S7), die durch den Sender (E) während der Ausgangsphase (PD) gesendet werden, durch einen ersten Schwellwert Wmax mit einem endlichen Wert begrenzt ist.

11. Verfahren zum Senden von Paketen nach Anspruch 8, 9 und 10 zusammen genommen, **dadurch gekennzeichnet, dass** der zweite vorgeschriebene Schwellwert ssthresh kleiner als der erste Schwellwert Wmax ist.

12. Verfahren zum Senden von Paketen nach Anspruch 11, **dadurch gekennzeichnet, dass** für den zweiten vorgeschriebenen Schwellwert ssthresh ein endlicher Wert vorgeschrieben ist, der gleich etwa drei Vierteln des ersten Schwellwerts Wmax ist.

13. Verfahren zum Senden von Paketen nach einem der Ansprüche 10 bis 12, **dadurch gekennzeichnet, dass** der erste Schwellwert Wmax in Abhängigkeit von Zeitintervallen (T) und der Bandbreite der Verbindung für jeden Empfänger (R) vorgeschrieben ist.

14. Verfahren zum Senden von Paketen nach einem der Ansprüche 10 bis 13, **dadurch gekennzeichnet, dass** der Sender (E) während der Ausgangsphase (PD) in jedem vorgeschriebenen Zeitintervall in einem dritten Prüfschritt (E7) prüft, ob ein vorgesehener Wert (F2) des Sendefensters, der gleich dem um das vorgeschriebene Inkrement von Paketen (P) vergrößerten Wert (F) des Sendefensters ist, kleiner als ein vorbestimmter erster Schwellwert (Wmax) ist, damit die Sendung (E9) des Bursts (S1 bis S7), der dem Zeitintervall entspricht, von diesem Inkrement (N) von Paketen (P) ist, wenn das Ergebnis der dritten Prüfung positiv (E8) ist, und damit die Sendung (E9) des Bursts (S1 bis S7), der dem Zeitintervall entspricht, von der Differenz zwischen dem ersten Schwellwert und dem Wert (F) des Sendefensters ist, wenn das Ergebnis der dritten Prüfung negativ ist (E10), wobei der Wert (F) des Sendefensters in Inkrementen um die Anzahl von Paketen des gesendeten Bursts (S1 bis S7) vergrößert wird.

15. Verfahren zum Senden von Paketen nach einem der vorhergehenden Ansprüche, **dadurch gekennzeichnet, dass** die in dem Telekommunikationsnetz (RI) eingerichtete Verbindung eine Hin- und Zurücklaufzeit zwischen dem Sender (E) und dem Empfänger (R) von mindestens 200 Millisekunden besitzt.

16. Sender (E), der ein Fenster (F) zum Senden von Datenpaketen aufweist, das durch die Datenmenge der Pakete (P) bestimmt ist, die gesendet wurden und für die noch keine dem ersten Paket (P) in der zeitlichen Sendereihenfolge entsprechende Rückmeldung (ACK) vom Empfänger (R) empfangen wurde,
**dadurch gekennzeichnet, dass** der Sender eine Einrichtung zum Senden von Paketen aufweist, die Folgendes aufweist:
- ein Mittel (SR) zum Überwachen des Empfangs der ersten Rückmeldung vom Empfänger (R) in der zeitlichen Reihenfolge durch den Sender (E),
- ein Mittel (DE) zur Auslösung von aufeinander folgenden Sendungen zum Auslösen der Sendung von Bursts (S1 bis S7) von vorgeschriebenen Anzahlen von mindestens einem Paket (P) in mehreren vorgeschriebenen aufeinander folgenden Zeitintervallen während der Ausgangsphase (PD) durch den Sender (E), um in jedem vorgeschriebenen Zeitintervall das Sendefenster (F) des Senders (E) in Inkrementen von der vorgeschriebenen Anzahl von Paketen des entsprechenden Bursts zu vergrößern,
- ein Mittel (DDE) zum Deaktivieren des Mittels (DE) zur Auslösung aufeinander folgender Sendungen, wenn das Mittel (SR) zur Überwachung des Empfangs anzeigt, dass die erste Rückmeldung (ACK) des Empfängers (R) durch den Sender (E) empfangen wurde.
